# EUROPEAN PATENT SPECIFICATION

(11) **EP 2 396 733 B1**
(45) Date of publication and mention of the grant of the patent: **08.07.2020**
(21) Application number: 10772817.2
(22) Date of filing: 06.05.2010
(51) Int. Cl.: H04L 29/06, H04L 12/18, H04N 21/43, H04N 21/41, H04N 21/4788

(54) **SYSTEM AND METHOD FOR IMS BASED COLLABORATIVE SERVICES ENABLING MULTIMEDIA APPLICATION SHARING**
SYSTEM UND VERFAHREN FÜR IMS-BASIERTE KOLLABORATIVE DIENSTE ZUR AKTIVIERUNG GEMEINSAMER NUTZUNG VON MULTIMEDIA-ANWENDUNGEN
SYSTÈME ET PROCÉDÉ POUR DES SERVICES EN COLLABORATION BASÉS SUR IMS PERMETTANT LE PARTAGE D'APPLICATION MULTIMÉDIA

(30) Priority: 06.05.2009 US 176001 P; 29.04.2010 US 769683
(43) Date of publication of application: 21.12.2011
(73) Proprietor: Huawei Technologies Co., Ltd., Longgang District Shenzhen, Guangdong 518129 (CN)
(72) Inventor: MAHDI, Kaniz, Carrollton, Texas 75007 (US)
(74) Representative: Körber, Martin Hans
(86) International application number: PCT/US2010/033841
(87) International publication number: WO 2010/129750

(56) References cited:
- US-A1- 2007 124 737
- US-A1- 2007 271 338
- US-A1- 2008 028 323
- US-A1- 2008 133 501
- US-A1- 2009 043 849
- US-A1- 2009 089 225
- "3rd Generation Partnership Project; Technical Specification Group Services and System Aspects; IP Multimedia Subsystem (IMS) service continuity enhancements; Service, policy and interaction; Stage 2 (Release 9)", 3GPP STANDARD; 3GPP TR 23.838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 1 April 2009 (2009-04-01), pages 1-53, XP050363944,

## Description

### TECHNICAL FIELD

The present invention relates generally to digital communications, and more particularly to a system and method for enabling multimedia sharing with Internet Protocol (IP) Multimedia Subsystem (IMS) based collaborative services.

### BACKGROUND

The Third Generation Partnership Project (3GPP) IMS technical standards may provide a powerful framework for enabling multimedia sharing. Collaborative services provided by 3GPP IMS may offer a wide range of communications and multimedia sharing functions that may be used to effectively communicate with users dispersed over a wide geographical area. As an example, remotely located users may be able to simultaneously view a video and share narration and comments.

US 2007/0271338 A1 introduces methods, systems, and products for synchronizing a media experience. In order to set up a shared collaborative session common control is established between a host device and an invitee device such that a shared content stream is synchronously controlled by inputs from both the host device and from the invitee device.

Technical Report 3GPP TR 23.838 V1 .1.0 (2009-04), 3rd Generation Partnership Project; Technical Specification Group Services and System Aspects; IP Multimedia Subsystem (IMS) service continuity enhancements; Service, policy and interaction; Stage 2 (Release 9) introduces technical specifications and enhancements for IMS sessions and solutions for mobility of media flows and control of a session between different devices.

### SUMMARY

These technical advantages are generally achieved, by embodiments of a system and method for enabling multimedia sharing with IMS based collaborative services as defined by the subject matter of appended independent claims 1 and 4.

According to an aspect, an embodiment of the present invention provides a method for application server operations. The method includes receiving a first message from a first communications device, the first message including a request to initiate a collaborative session, forming the collaborative session with a second communications device, wherein the second communications device is specified in the first message, sending a second message to the first communications device, the second message confirming an establishment of the collaborative session, merging control information only from the first communications device and media descriptions from the first communications device and the second communications device, wherein the method is applied to Internet Protocol (IP) Multimedia Subsystem (IMS) based collaborative services; and relaying, by a slave application server, service controls to the master application server.

According to another aspect, an embodiment of the present invention provides an application server device, where the device comprises a master application server is adapted to receiving a first message from a first communications device (210), the first message including a request to initiate a collaborative session (200); forming the collaborative session (200) with a second communications device (216), wherein the second communications device is specified in the first message; sending a second message to the first communications device (210), the second message confirming an establishment of the collaborative session (200); merging control information only from the first communications device (210) and media descriptions from the first communications device (210) and the second communications device (216), wherein the master application server forms the collaborative session with the first (210) and second (216) communications device compliant with Internet Protocol (IP) Multimedia Subsystem (IMS) based collaborative services; and a slave application server, adapted to: relaying control information from the second communications device (607) to the master application server.

An advantage of an embodiment is that synchronization, arbitration, and coordination of service control when service control for a collaborative session is provided by more than one IMS subscriber. Therefore, multiple IMS subscribers may have control (or partial control) over a session instead of giving all of the controls to a single IMS subscriber.

A further advantage of an embodiment is that existing hardware and/or support structures are utilized so that implementation of the embodiments does not require a significant investment in new hardware and/or support.

The foregoing has outlined rather broadly the features and technical advantages of the present invention in order that the detailed description of the embodiments that follow may be better understood. Additional features and advantages of the embodiments will be described hereinafter which form the subject of the claims of the invention. It should be appreciated by those skilled in the art that the conception and specific embodiments disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more complete understanding of the embodiments, and the advantages thereof, reference is now made to the following descriptions taken in conjunction with the accompanying drawings, in which:
Figure 1 is a diagram of a high-level view of a collaborative session with remotely distributed users;
Figure 2a is a diagram of a first collaborative session;
Figure 2b is a diagram of a second collaborative session;
Figure 2c is a diagram of a third collaborative session;
Figure 3a is a diagram of a first exemplary collaborative service community with one remote user;
Figure 3b is a diagram of a second exemplary collaborative service community with multiple remote users;
Figure 4 is a diagram of a signaling/bearer architecture;
Figure 5a is a diagram of a message exchange in establishing a collaborative session with multiple UEs sharing control and media;
Figure 5b is a flow diagram of first UE operations in establishing a collaborative session with multiple UEs sharing control and media;
Figure 5c is a flow diagram of second UE operations in establishing a collaborative session with multiple UEs sharing control and media;
Figure 5d is a flow diagram of first SCC AS operations in establishing a collaborative session with multiple UEs sharing control and media;
Figure 6a is a diagram of a message exchange in establishing a collaborative session with multiple UEs sharing media and only one UE providing control;
Figure 6b is a flow diagram of first UE operations in establishing a collaborative session with multiple UEs sharing media and only one UE providing control;
Figure 6c is a flow diagram of second UE operations in establishing a collaborative session with multiple UEs sharing media and only one UE providing control;
Figure 6d illustrates a flow diagram of first SCC AS operations in establishing a collaborative session with multiple UEs sharing media and only one UE providing control;
Figure 7a is a diagram of a message exchange in a UE joining an established collaborative session;
Figure 7b is a flow diagram of first UE operations in a UE joining an established collaborative session;
Figure 7c is a flow diagram of second UE operations in a UE joining an established collaborative session;
Figure 7d illustrates a flow diagram of first SCC AS operations in a UE joining an established collaborative session;
Figure 8a is a diagram of a message exchange in a UE joining an established collaborative session, wherein the UE decides to join on its own;
Figure 8b is a flow diagram of first UE operations in a UE joining an established collaborative session, wherein the UE decides to join on its own;
Figure 8c is a flow diagram of second UE operations in a UE joining an established collaborative session, wherein the UE decides to join on its own;
Figure 8d is a flow diagram of first SCC AS operations in a UE joining an established collaborative session, wherein the UE decides to join on its own;
Figure 9a is a diagram of a message exchange in a UE joining an established collaborative session, wherein the UE decides to join on its own and its serving SCC AS becomes master AS;
Figure 9b is a flow diagram of first UE operations in a UE joining an established collaborative session, wherein the UE decides to join on its own and its serving SCC AS becomes master AS;
Figure 9c is a flow diagram of second UE operations in a UE joining an established collaborative session, wherein the UE decides to join on its own and its serving SCC AS becomes master AS;
Figure 9d is a flow diagram of second UE operations in a UE joining an established collaborative session, wherein the UE decides to join on its own and its serving SCC AS becomes master AS;
Figure 9e illustrates a flow diagram of first SCC AS operations in a UE joining an established collaborative session, wherein the UE decides to join on its own and its serving SCC AS becomes master AS;
Figure 10a is a diagram of a message exchange in linking two on going collaborative sessions;
Figure 10b is a flow diagram of first UE operations in linking two on going collaborative sessions;
Figure 10c is a flow diagram of second UE operations in linking two on going collaborative sessions;
Figure 10d is a flow diagram of second UE operations in linking two on going collaborative sessions; and
Figure 10e is a flow diagram of first SCC AS operations in linking two on going collaborative sessions.

### DETAILED DESCRIPTION OF ILLUSTRATIVE EMBODIMENTS

The making and using of the embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The embodiments will be described in a specific context, namely a multimedia session with remotely distributed users using a 3GPP IMS compliant communications system. The invention may also be applied, however, to multimedia sessions with remotely distributed users using other communications systems with support for collaborative operation.

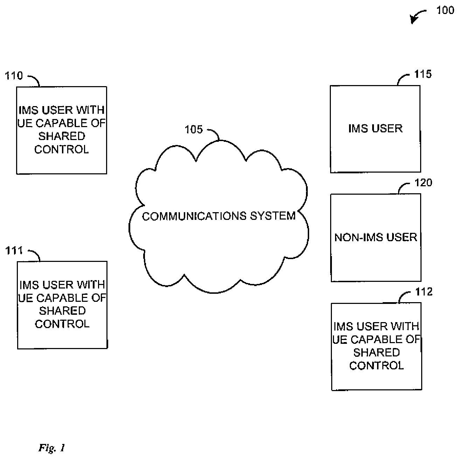

Figure 1 illustrates a high-level view of a collaborative session 100 with remotely distributed users. Collaborative session 100 includes a number of users communicating together over a communications system 105. Communications system 105 may be made up of a single communications system or multiple communications systems. For example, a 3GPP IMS compliant communications system may provide connectivity for control, media, and data for users with compatible communications devices, while for users with legacy equipment, a public switched telephone network (PSTN) may be available, while for users that are relatively close together, WiFi or other short-range wireless communications systems may be used to provided connectivity.

The users of collaborative session 100 may have different characteristics and capabilities. Some of the users, e.g., users 110 through 112, may have IMS compliant communications devices that are capable of shared control, while some of the users, e.g., user 115, may have IMS compliant communications devices that are not capable of shared control, while some of the users, e.g., user 120, may not have IMS compliant communications devices at all.

Users 110 through 112 may participate in sharing of control, data, and media in collaborative session 100, while user 115 may participate in sharing of data and media and may assume control of collaborative session 100. User 120 may participate in sharing of data and media but may not assume control of collaborative session 100.

A collaborative services community (CSC) may be formed dynamically by a collection of collaborative service users engaged in a collaborative service comprising a collaborative session or a set of collaborative sessions linked to each other. A master service centralization and continuity (SCC) application server (AS) is assigned to a CSC upon setup of a new collaborative session or upon merger of two or more standard IMS sessions to form a collaborative session, or merger of two or collaborative sessions. Other SCC AS involved in a collaborative session acts in a slave mode, simply relaying service controls to the master SCC AS.

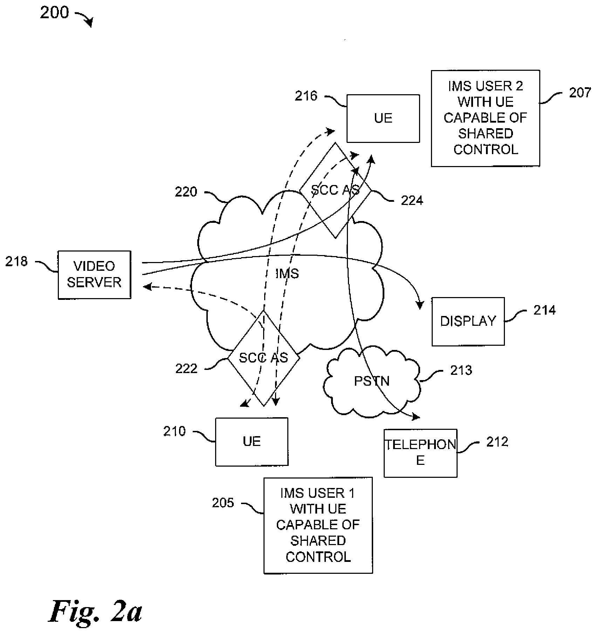

Figure 2a illustrates a first collaborative session 200. First collaborative session 200 includes a first IMS user "IMS USER 1" 205 with a UE 210 capable of shared control, a telephone 212 that is connected to a public switched telephone network (PSTN) 213, and a video display 214. First collaborative session 200 also includes a second IMS user "IMS USER 2" 207 with a UE 216 capable of shared control. Also included in first collaborative session 200 may be a video server 218 that may deliver streaming video to users, such as first IMS user 205 and second IMS user 207.

First IMS user 205 may initiate first collaborative session 200 with second IMS 207 through an IMS communications system 220 with a SCC AS 222 for first IMS user 205 serving as a master AS and a SCC AS 224 for second IMS user 207 serving as a slave AS. First IMS user 205 may configure first collaborative session 200 so that video from video server 218 may be displayed on display 214 through IMS 220 and a voice connection may be established between telephone 212 and UE 216 through PSTN 213. As shown in Figure 2a, an exchange of control information is illustrated as arrowed dashed lines and an exchange of video/voice information is illustrates as arrowed solid lines. First IMS user 205 may control the streaming video and the voice connection using UE 210. Controls for first IMS user 205 and second IMS user 207 may be synchronized so that seamless video and voice sessions are experienced by both. A single SCC AS, namely SCC AS 222, may be used to arbitrate first collaborative session 200 control signaling so that control is synchronized for the service.

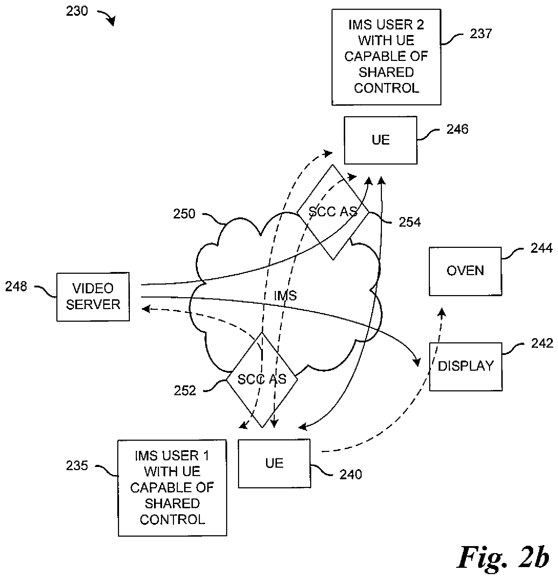

Figure 2b illustrates a second collaborative session 230. Second collaborative session 230 includes a first IMS user "IMS USER 1" 235 with a UE 240 capable of shared control, a video display 242, and an oven 244 with communications system connectivity and control. Second collaborative session 230 also includes a second IMS user "IMS USER 2" 237 with a UE 246 capable of shared control. Also included in second collaborative session 230 may be a video server 248 that may deliver streaming video to users, such as first IMS user 235 and second IMS user 237.

As an example, first IMS user 235 may be utilizing oven 244 to cook food when second IMS user 237 calls to discuss a video. First IMS user 235 initiates second collaborative session 230 with second IMS user 237 through an IMS communications system 250 with a SCC AS 252 for first IMS user 235 serving as a master AS and a SCC AS 254 for second IMS user 237 serving as a slave AS. First IMS user 235 may configure second collaborative session 230 so that video from video server 248 displays on display 242 and a voice connection is established between UE 240 and UE 246. As shown in Figure 2b, an exchange of control information is illustrated as arrowed dashed lines and an exchange of video/voice information is illustrates as arrowed solid lines.

While watching the video, first IMS user 235 notices that the food in oven 244 will burn unless oven 244 is turned off, so first IMS user 235 turns off oven 244 using UE 240 to control oven 244. Since oven 244 and first IMS user 235 are co-located, control of oven 244 by first IMS user 235 may not need to go through IMS communications system 250. Instead, a short-range communications system, such as WiFi or a femto network may be sufficient. A single SCC AS, namely SCC AS 252, may be used to arbitrate second collaborative session 230 control signaling so that control is synchronized for the service.

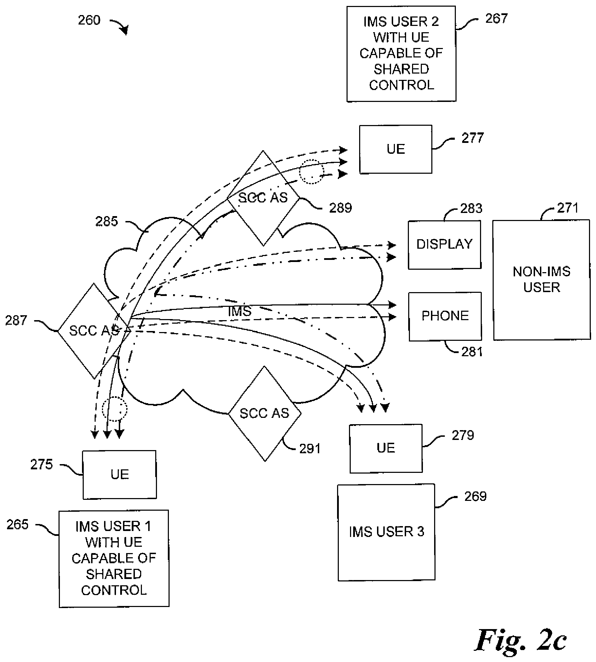

Figure 2c illustrates a third collaborative session 260. Third collaborative session 260 includes a first IMS user "IMS USER 1" 265 with a UE 275 capable of shared control. Third collaborative session 260 also includes a second IMS user "IMS USER 2" 267 with a UE 277 capable of shared control. Also included in third collaborative session 260 may be a third IMS user "IMS USER 3" 269 with a UE 279 that is not capable of shared control and a non-IMS user 271 with a telephone 281 and a display 283.

As an example, first IMS user 265 may initiate third collaborative session 260 with second IMS user 267, third IMS user 269, and non-IMS user 271 through an IMS communications system 285 with a SCC AS 287 for first IMS user 265 serving as a master AS and a SCC AS 289 for second IMS user 267 and a SCC AS 291 for third IMS user 269 each serving as a slave AS. First IMS user 265 may configure third collaborative session 260 so that images/video from UE 275 and UE 277 may be shared with UE 279 and display 283, and a voice connection is established between UE 275, UE 277, UE 279, and telephone 281. As shown in Figure 2c, an exchange of control information is illustrated as arrowed dashed lines, an exchange of video information is illustrates as arrowed dashed-dotted lines, and an exchange of voice information is illustrates as arrowed dashed lines.

A single SCC AS, namely SCC AS 287, may be used to arbitrate third collaborative session 260 control signaling so that control is synchronized for the service. Control signaling for third IMS user 269 may not need to be arbitrated since control is not shared with third IMS user 269.

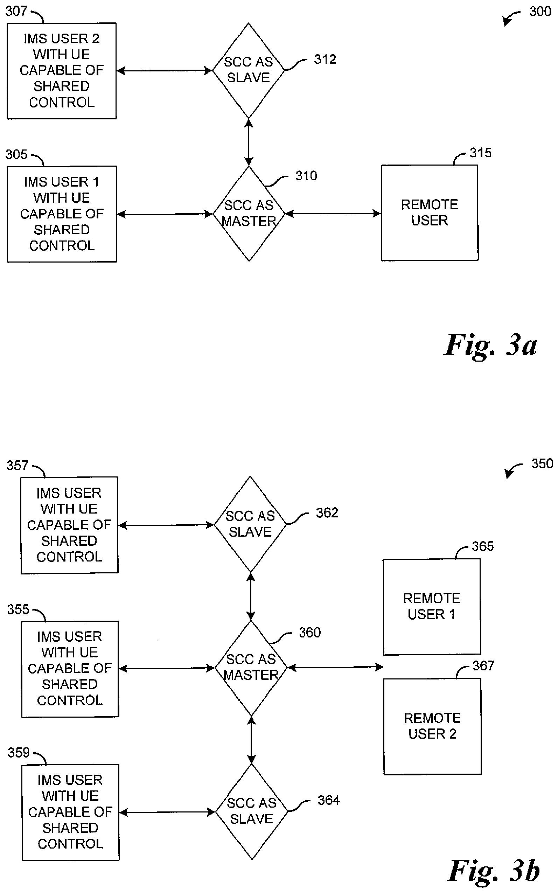

Figure 3a illustrates a first exemplary collaborative service community 300 with one remote user. Collaborative service community 300 includes two IMS users (a first IMS user 305 and a second IMS user 307) with first IMS user 305 connected to an IMS communications system through a first SCC AS 310 acting as a master AS and second IMS user 307 connected to the IMS communications system through a second SCC AS 312 acting as a slave AS. A remote user 315 may be a part of collaborative service community 300 sharing media and data information through first SCC AS 310. Remote user 315 may not be able to share control of collaborative service community 300 since it does not have a UE capable of sharing control.

Figure 3b illustrates a second exemplary collaborative service community 350 with multiple remote users. Collaborative service community 350 includes three IMS users (a first IMS user 355, a second IMS user 357, and a third IMS user 359) with first IMS user 355 connected to an IMS communications system through a first SCC AS 360 acting as a master AS, second IMS user 357 connected to the IMS communications system through a second SCC AS 362 acting as a slave AS, and third IMS user 357 connected to the IMS communications system through a third SCC AS 364 also acting as a slave AS. A first remote user 365 and a second remote user 367 may be a part of collaborative service community 350 sharing media and data information through first SCC AS 310. Remote users 365 and 367 may not be able to share control of collaborative service community 350 since they do not have UEs capable of sharing control.

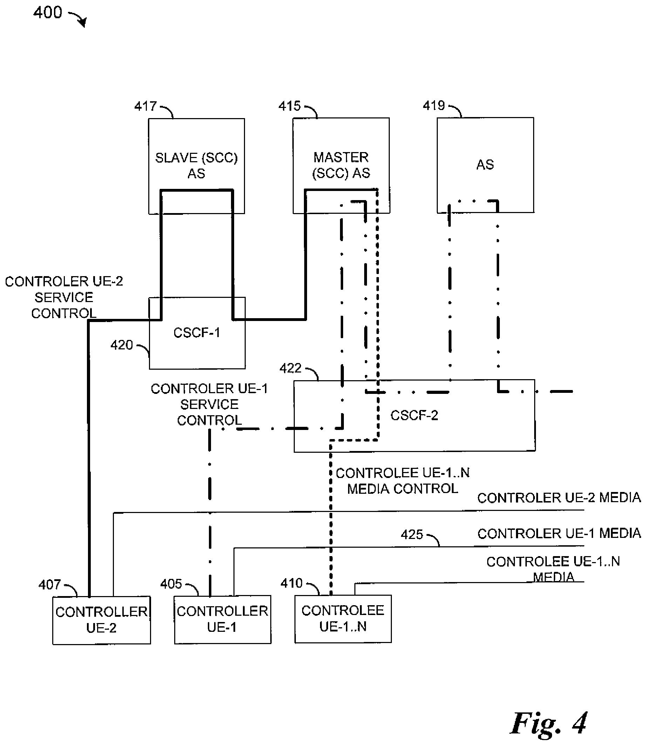

Figure 4 illustrates a signaling/bearer architecture 400. Signaling/bearer architecture 400 may be representative of a typical architecture of a collaborative session community as discussed previously. Signaling/bearer architecture 400 includes one or more controller UEs, such as controller UE-1 405 and controller UE-2 407, that may singularly (or share) control the collaborative session, with one or more controlee UEs, such as controlee UE-1..N 410, that may participate in the collaborative session but cannot control in whole or in part the collaborative session.

Signaling/bearer architecture 400 also includes one master AS, such as SCC master AS 415, one or more slave AS, such as SCC slave AS 417. Signaling/bearer architecture 400 may also include other SCC AS, such as AS 419, that neither functions as a slave AS nor a master AS.

Signaling/bearer architecture 400 also includes one or more call system control functions (CSCF), such as CSCF-1 420 and CSCF-2, that may be responsible for signaling via session initiation protocol (SIP) between a transport plane, a control plane, and an application plane of an IMS communications system.

As an example, controller UE-1 405 may initiate a collaborative session by sending control information to CSCF-2 422, which may signal using SIP to establish the collaborative session with another UE served by AS 419. Control signaling may propagate from controller UE-1 405 to CSCF-2 422 to SCC master AS 415, back to CSCF-2 422 to AS 419 then to the other UE making up the collaborative session. Media information may flow into and out of controller UE-1 405 over stream 425.

Similarly, controller UE-2 407 may be in a collaborative session with controlee UE-1..N 410 with control information flowing from controller UE-2 407 to CSCF-1 420 and SCC slave AS 417, back to CSCF-1 420 to SCC master AS 415 and to controlee UE-1..N 410. Media information may flow into and out of controller UE-2 407 as well as controlee UE-1..N 410 over corresponding streams.

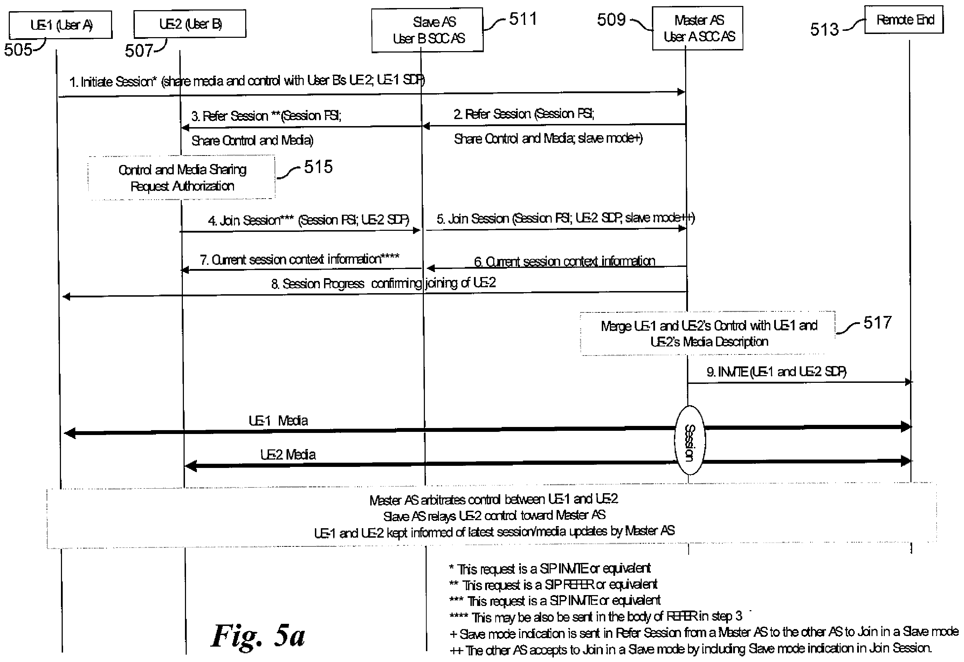

Figure 5a illustrates a message exchange in establishing a collaborative session with multiple UEs sharing control and media. As shown in Figure 5a, the message exchange in establishing the collaborative session with multiple UEs sharing control and media involves messages between a first UE 505, a second UE 507, a first SCC AS 509 serving first UE 505, a second SCC AS 511 serving second UE 505, and one or more remote UEs 513.

The message exchange may begin with first UE 505 initiating the collaborative session (shown as event #1). In the collaborative session, first UE 505 intends to share media and control with second UE 507. First UE 505 may initiate the collaborative session by transmitting a SIP INVITE or equivalent message to first SCC AS 509. First SCC AS 509 may send a session refer message to second SCC AS 511 which is serving second UE 507 (shown as event #2).

Second SCC AS 511 may invite second UE 507 to join the collaborative session (shown as event #3). The invite may be in the form of a SIP REFER or equivalent message sent to second UE 507 by second SCC AS 511. Second UE 507 may perform a control and media request authorization (block 515) to determine if second UE 507 is able to join the collaborative session.

Assuming that second UE 507 is able to join the collaborative session, second UE 507 may initiate a join session procedure (shown as event #4) with second SCC AS 511. Second UE 507 may initiate the join session procedure by sending a SIP INVITE or equivalent message to second SCC AS 511. Second SCC AS 511 may complete the join session procedure by sending a message to first SCC AS 509 (shown as event #5), the message indicating that second SCC AS 511 will operate in a slave mode in the collaborative session.

First SCC AS 509 (operating in a master mode) may send context information regarding the collaborative session to second SCC AS 511 (shown as event #6), which may forward the context information to second UE 507 (shown as event #7). According to an embodiment, the context information forwarded from second SCC AS 511 to second UE 507 may be in a body of a SIP REFER message sent in event #3).

First SCC AS 509 may also send a session progress message to first UE 505 (shown as event #8). The session progress message may confirm second UE 507 joining the collaborative session set up by first UE 505. First SCC AS 509 may then merge control from first UE 505 and second UE 507 as well as media descriptions from first UE 505 and second UE 507 (block 517). If there are remote UEs (such as remote UE 513), first SCC AS 509 may send an invite to the remote UEs from both first UE 505 and second UE 507 (shown as event #9). First SCC AS 509 may the control the flow of media to and from first UE 505, second UE 507, and the remote UEs.

First SCC AS 509 arbitrates control between first UE 505 and second UE 507, while second SCC AS 511 relays second UE 507 control information to first SCC AS 509. First SCC AS 509 informs first UE 505 and second UE 507 of latest session and media updates.

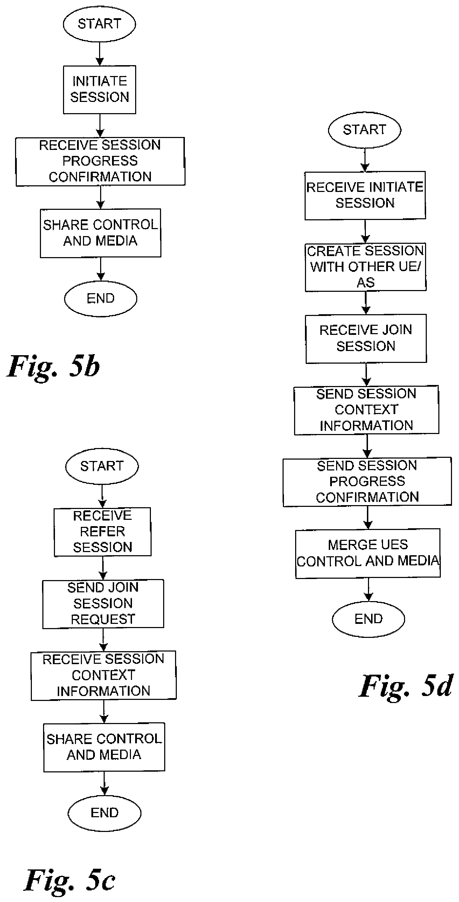

Figure 5b illustrates a flow diagram of first UE operations in establishing a collaborative session with multiple UEs sharing control and media. Figure 5c illustrates a flow diagram of second UE operations in establishing a collaborative session with multiple UEs sharing control and media. Figure 5d illustrates a flow diagram of first SCC AS operations in establishing a collaborative session with multiple UEs sharing control and media.

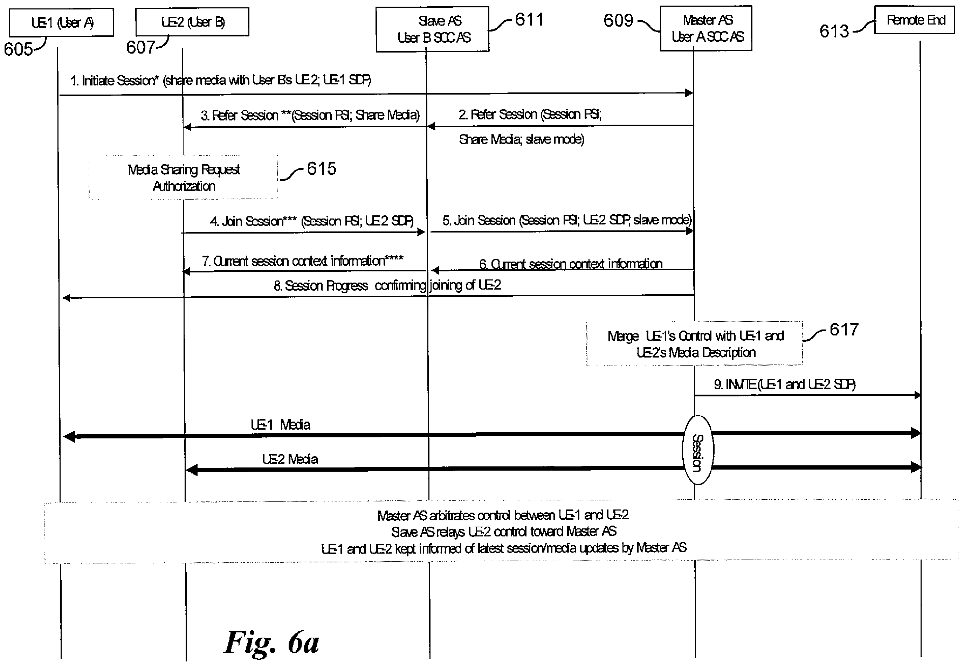

Figure 6a illustrates a message exchange in establishing a collaborative session with multiple UEs sharing media and only one UE providing control. As shown in Figure 6a, the message exchange in establishing the collaborative session with multiple UEs sharing media and only one UE providing control involves messages between a first UE 605, a second UE 607, a first SCC AS 609 serving first UE 605, a second SCC AS 611 serving second UE 605, and one or more remote UEs 513.

The message exchange may begin with first UE 605 initiating the collaborative session (shown as event #1). In the collaborative session, first UE 605 intends to share media with second UE 607, with only first UE 605 providing control. First UE 605 may initiate the collaborative session by transmitting a SIP INVITE or equivalent message to first SCC AS 609. First SCC AS 609 may send a session refer message to second SCC AS 611 which is serving second UE 607 (shown as event #2).

Second SCC AS 611 may invite second UE 607 to join the collaborative session (shown as event #3). The invite may be in the form of a SIP REFER or equivalent message sent to second UE 607 by second SCC AS 611. Second UE 607 may perform a media request authorization (block 615) to determine if second UE 607 is able to join the collaborative session and share media.

Assuming that second UE 607 is able to join the collaborative session, second UE 607 may initiate a join session procedure (shown as event #4) with second SCC AS 611. Second UE 607 may initiate the join session procedure by sending a SIP INVITE or equivalent message to second SCC AS 611. Second SCC AS 611 may complete the join session procedure by sending a message to first SCC AS 609 (shown as event #5), the message indicating that second SCC AS 611 will operate in a slave mode in the collaborative session.

First SCC AS 609 (operating in a master mode) may send context information regarding the collaborative session to second SCC AS 611 (shown as event #6), which may forward the context information to second UE 607 (shown as event #7). According to an embodiment, the context information forwarded from second SCC AS 611 to second UE 607 may be in a body of a SIP REFER message sent in event #3).

First SCC AS 609 may also send a session progress message to first UE 605 (shown as event #8). The session progress message may confirm second UE 607 joining the collaborative session set up by first UE 605. First SCC AS 609 may then merge control from first UE 605 only as well as media descriptions from first UE 605 and second UE 607 (block 617). If there are remote UEs (such as remote UE 613), first SCC AS 609 may send an invite to the remote UEs from both first UE 605 and second UE 607 (shown as event #9). First SCC AS 609 may the control the flow of media to and from first UE 605, second UE 607, and the remote UEs.

First SCC AS 609 arbitrates control between first UE 605 and second UE 607, while second SCC AS 611 relays second UE 607 control information to first SCC AS 609. First SCC AS 609 informs first UE 605 and second UE 607 of latest session and media updates.

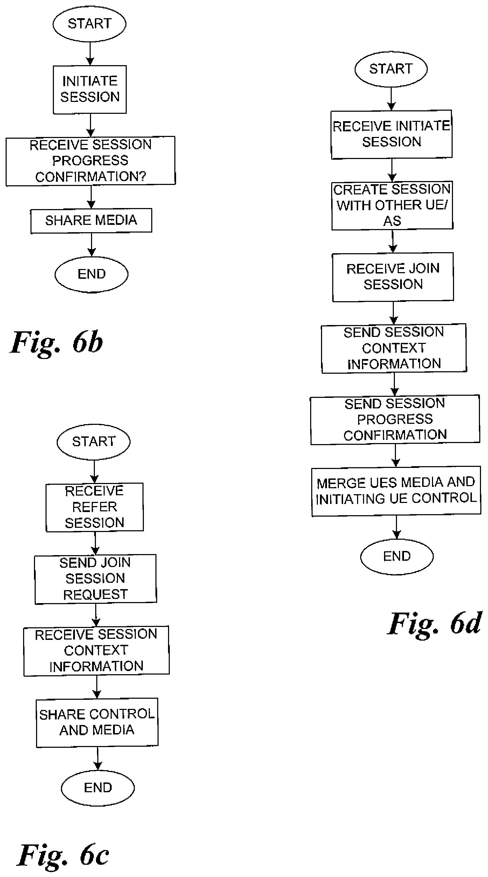

Figure 6b illustrates a flow diagram of first UE operations in establishing a collaborative session with multiple UEs sharing media and only one UE providing control. Figure 6c illustrates a flow diagram of second UE operations in establishing a collaborative session with multiple UEs sharing media and only one UE providing control. Figure 6d illustrates a flow diagram of first SCC AS operations in establishing a collaborative session with multiple UEs sharing media and only one UE providing control.

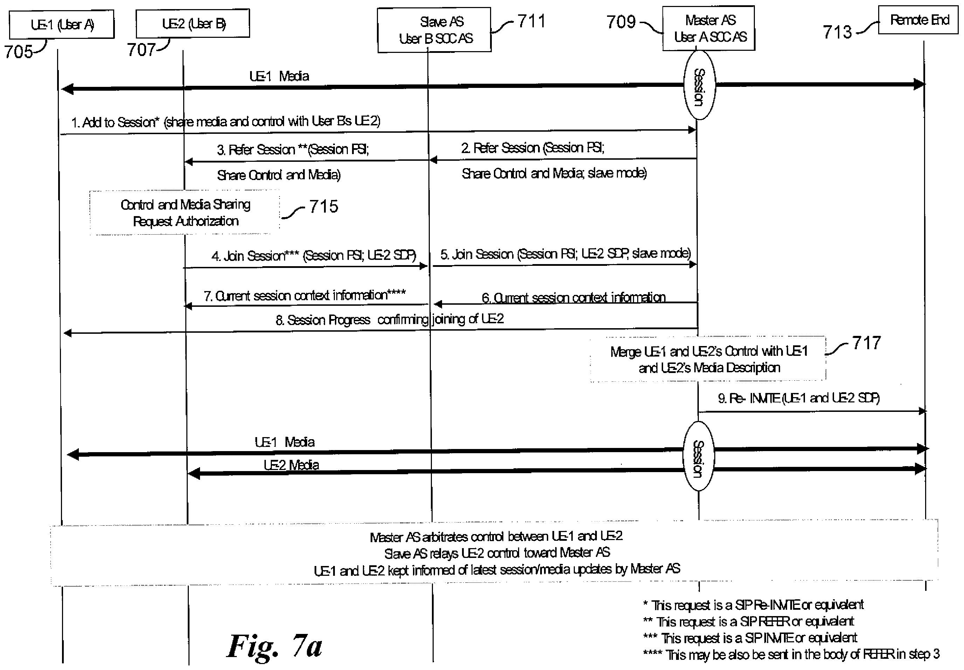

Figure 7a illustrates a message exchange in a UE joining an established collaborative session. As shown in Figure 7a, the message exchange in a UE joining an established collaborative session involves messages between a first UE 705, a second UE 707, a first SCC AS 709 serving first UE 705, a second SCC AS 711 serving second UE 705, and one or more remote UEs 713.

The message exchange may begin with the collaborative session already in progress between first UE 705 and one or more remote UEs 713, with the collaborative session under the control of first SCC AS 709. First UE 705, desiring to add second UE 707 to the collaborative session, may initiate the addition to the collaborative session by initiating an add to collaborative session (shown as event #1). First UE 705 may initiate the add to collaborative session by transmitting a SIP PRE-INVITE or equivalent message to first SCC AS 709. First SCC AS 709 may send a session refer message to second SCC AS 711 which is serving second UE 707 (shown as event #2).

Second SCC AS 711 may invite second UE 707 to join the collaborative session (shown as event #3). The invite may be in the form of a SIP REFER or equivalent message sent to second UE 707 by second SCC AS 711. Second UE 707 may perform a control and media request authorization (block 715) to determine if second UE 707 is able to join the collaborative session and share control and media.

Assuming that second UE 707 is able to join the collaborative session, second UE 707 may initiate a join session procedure (shown as event #4) with second SCC AS 711. Second UE 707 may initiate the join session procedure by sending a SIP INVITE or equivalent message to second SCC AS 711. Second SCC AS 711 may complete the join session procedure by sending a message to first SCC AS 709 (shown as event #5), the message indicating that second SCC AS 711 will operate in a slave mode in the collaborative session.

First SCC AS 709 (operating in a master mode) may send context information regarding the collaborative session to second SCC AS 711 (shown as event #6), which may forward the context information to second UE 707 (shown as event #7). According to an embodiment, the context information forwarded from second SCC AS 711 to second UE 707 may be in a body of a SIP REFER message sent in event #3).

First SCC AS 709 may also send a session progress message to first UE 705 (shown as event #8). The session progress message may confirm second UE 707 joining the collaborative session as requested by first UE 705. First SCC AS 709 may then merge control from first UE 705 and second UE 707 as well as media descriptions from first UE 705 and second UE 707 (block 717). If there are remote UEs (such as remote UE 713), first SCC AS 709 may re-invite the remote UEs by sending a re-invite to the remote UEs from both first UE 705 and second UE 707 (shown as event #9). First SCC AS 709 may the control the flow of media to and from first UE 705, second UE 707, and the remote UEs.

First SCC AS 709 arbitrates control between first UE 705 and second UE 707, while second SCC AS 711 relays second UE 707 control information to first SCC AS 709. First SCC AS 709 informs first UE 705 and second UE 707 of latest session and media updates.

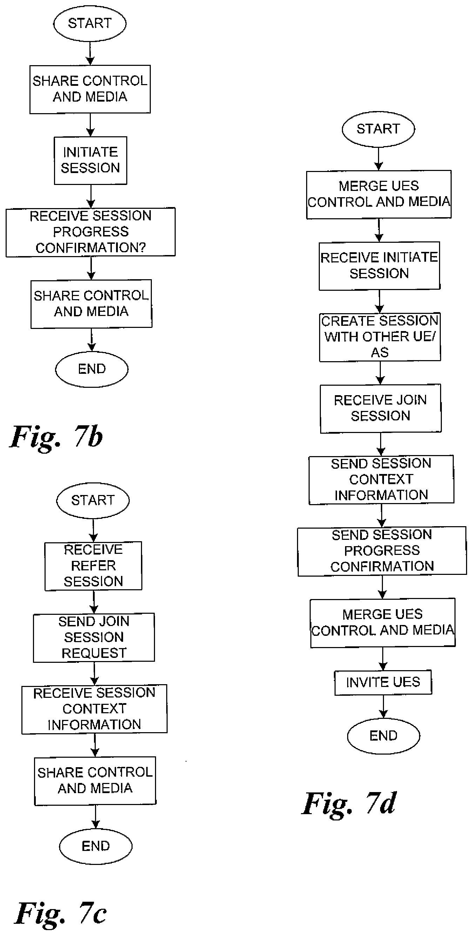

Figure 7b illustrates a flow diagram of first UE operations in a UE joining an established collaborative session. Figure 7c illustrates a flow diagram of second UE operations in a UE joining an established collaborative session. Figure 7d illustrates a flow diagram of first SCC AS operations in a UE joining an established collaborative session.

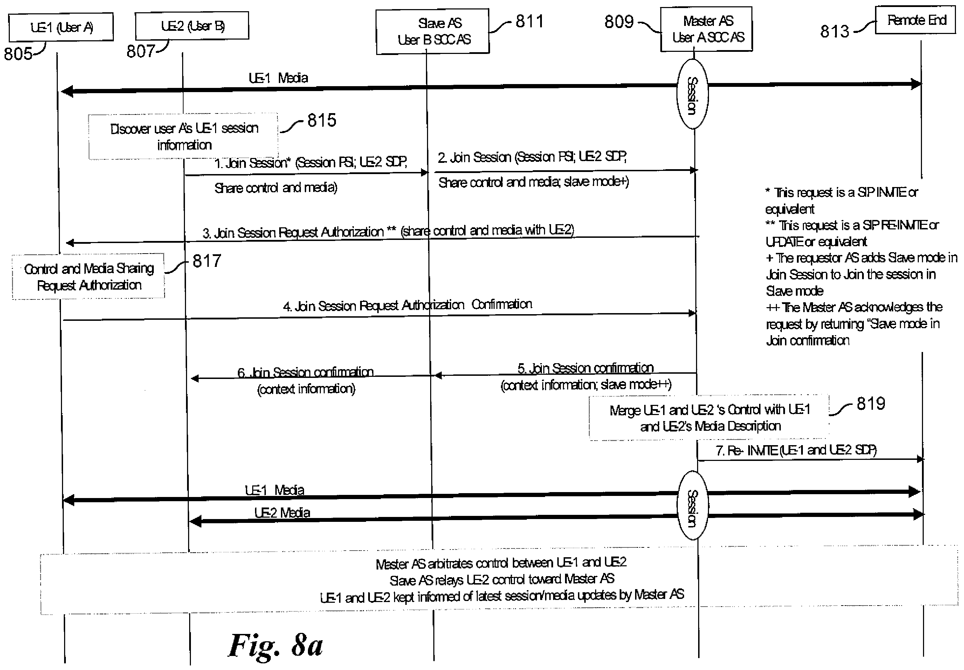

Figure 8a illustrates a message exchange in a UE joining an established collaborative session, wherein the UE decides to join on its own. As shown in Figure 8a, the message exchange in a UE joining an established collaborative session, wherein the UE decides to join on its own, involves messages between a first UE 805, a second UE 807, a first SCC AS 809 serving first UE 805, a second SCC AS 811 serving second UE 805, and one or more remote UEs 813.

The message exchange may begin with the collaborative session already in progress between first UE 805 and one or more remote UEs 813, with the collaborative session under the control of first SCC AS 809. Second UE 807 discovers the collaborative session and desires to add itself to the collaborative session (block 815). Second UE 807 may initiate the addition to the collaborative session by initiating join session (shown as event #1). Second UE 807 may initiate the join session by transmitting a SIP INVITE or equivalent message to second SCC AS 811. Second SCC AS 811 may send a join session to first SCC AS 809 which is serving first UE 805 (shown as event #2).

First SCC AS 809 may initiate a join session request authorization with first UE 805 (shown as event #3) to determine if second UE 807 may join the collaborative session. The join session request authorization may be initiated by a message such as a SIP PRE-INVITE or UPDATE or an equivalent message send to first UE 805. First UE 805 may perform a media and control sharing request authorization (block 817) to determine if second UE 807 may join the collaborative session.

Assuming that second UE 807 is able to join the collaborative session, first UE 805 may complete the join session request authorization by sending a confirmation message to first SCC AS 809 (shown as event #4). First SCC AS 809 may send a join session confirmation message to second SCC AS 811 (shown as event #5) with the message containing context information as well as instructions for second SCC AS 811 to operate in a slave mode. Second SCC AS 811 may forward the confirmation message to second UE 807 (shown as event #6).

First SCC AS 809 may then merge control from first UE 805 and second UE 807 as well as media descriptions from first UE 805 and second UE 807 (block 819). If there are remote UEs (such as remote UE 813), first SCC AS 809 may re-invite the remote UEs by sending a re-invite to the remote UEs from both first UE 805 and second UE 807 (shown as event #7). First SCC AS 809 may the control the flow of media to and from first UE 805, second UE 807, and the remote UEs.

First SCC AS 809 arbitrates control between first UE 805 and second UE 807, while second SCC AS 811 relays second UE 807 control information to first SCC AS 809. First SCC AS 809 informs first UE 805 and second UE 807 of latest session and media updates.

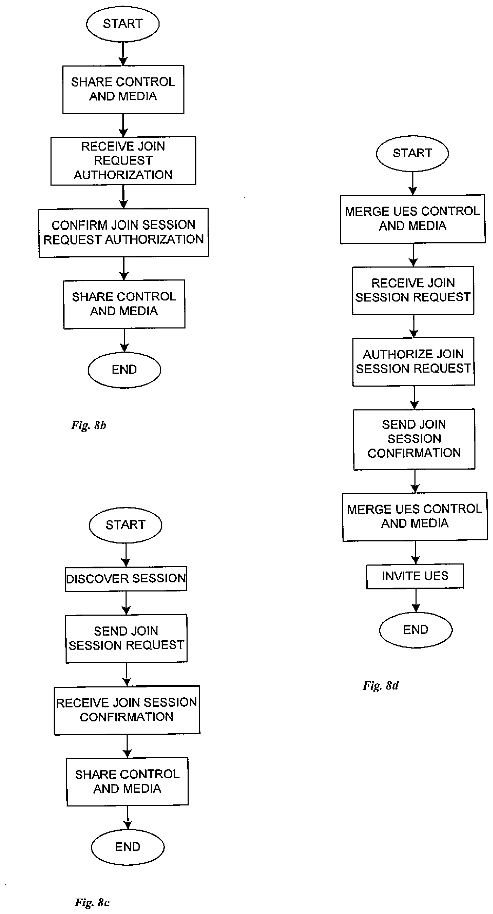

Figure 8b illustrates a flow diagram of first UE operations in a UE joining an established collaborative session, wherein the UE decides to join on its own. Figure 8c illustrates a flow diagram of second UE operations in a UE joining an established collaborative session, wherein the UE decides to join on its own. Figure 8d illustrates a flow diagram of first SCC AS operations in a UE joining an established collaborative session, wherein the UE decides to join on its own.

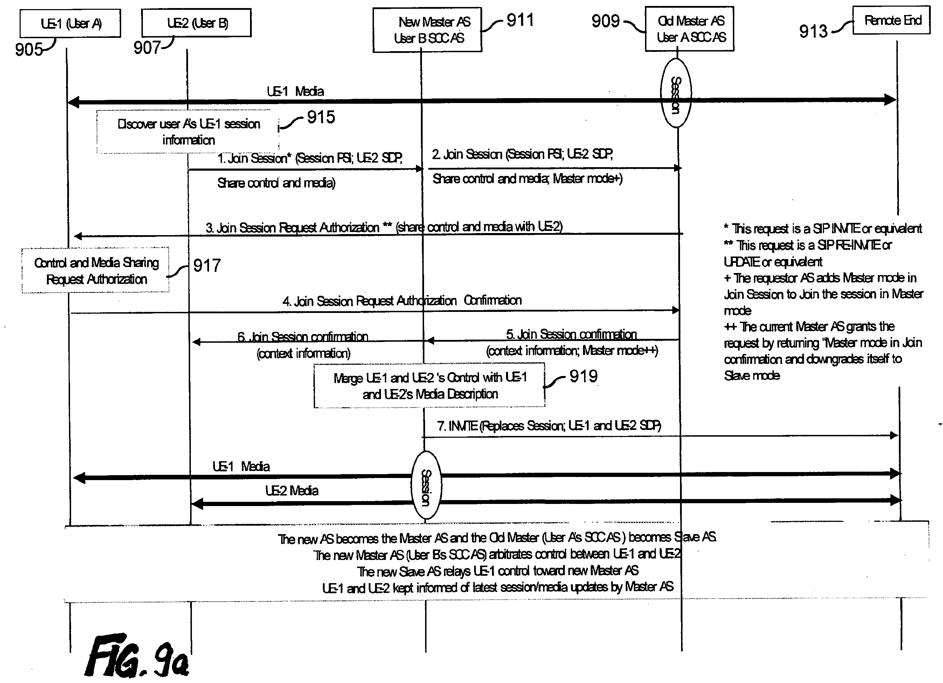

Figure 9a illustrates a message exchange in a UE joining an established collaborative session, wherein the UE decides to join on its own and its serving SCC AS becomes master AS. As shown in Figure 9a, the message exchange in a UE joining an established collaborative session, wherein the UE decides to join on its own and its serving SCC AS becomes master AS, involves messages between a first UE 905, a second UE 907, a first SCC AS 909 serving first UE 905, a second SCC AS 911 serving second UE 905, and one or more remote UEs 913.

The message exchange may begin with the collaborative session already in progress between first UE 905 and one or more remote UEs 913, with the collaborative session under the control of first SCC AS 909. Second UE 907 discovers the collaborative session and desires to add itself to the collaborative session (block 915). Second UE 907 may initiate the addition to the collaborative session by initiating join session (shown as event #1). Second UE 907 may initiate the join session by transmitting a SIP INVITE or equivalent message to second SCC AS 911. Second SCC AS 911 may send a join session message to first SCC AS 909 which is serving first UE 905 (shown as event #2). Since second SCC AS 911 desires to become master AS, second SCC AS 911 indicates its intention in the join session message.

First SCC AS 909 may initiate a join session request authorization with first UE 905 (shown as event #3) to determine if second UE 907 may join the collaborative session. The join session request authorization from first SCC AS 909 includes information regarding second SCC AS 911 intending to become master AS. The join session request authorization may be initiated by a message such as a SIP PRE-INVITE or UPDATE or an equivalent message send to first UE 905. First UE 905 may perform a media and control sharing request authorization (block 917) to determine if second UE 907 may join the collaborative session.

Assuming that second UE 907 is able to join the collaborative session, first UE 905 may complete the join session request authorization by sending a confirmation message to first SCC AS 909 (shown as event #4). First SCC AS 909 may send a join session confirmation message to second SCC AS 911 (shown as event #5) with the message containing context information as well as instructions for second SCC AS 911 to operate in a master mode. First UE 905 may then begin operating in a slave mode. Second SCC AS 911 may forward the confirmation message to second UE 907 (shown as event #6).

Second SCC AS 909 (now operating in master mode) may then merge control from first UE 905 and second UE 907 as well as media descriptions from first UE 905 and second UE 907 (block 919). If there are remote UEs (such as remote UE 913), second SCC AS 909 may re-invite the remote UEs by sending a re-invite to the remote UEs from both first UE 905 and second UE 907 (shown as event #7). Second SCC AS 909 may the control the flow of media to and from first UE 905, second UE 907, and the remote UEs.

Second SCC AS 911 arbitrates control between first UE 905 and second UE 807, while first SCC AS 909 relays first UE 905 control information to second SCC AS 911. Second SCC AS 911 informs first UE 905 and second UE 907 of latest session and media updates.

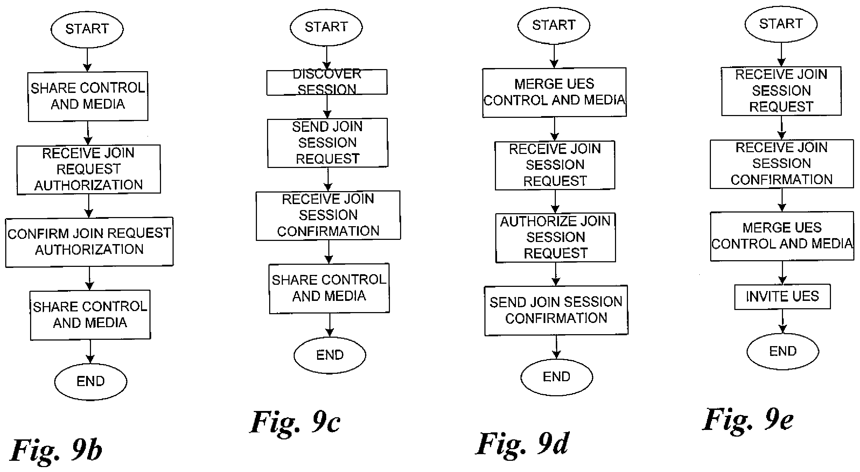

Figure 9b illustrates a flow diagram of first UE operations in a UE joining an established collaborative session, wherein the UE decides to join on its own and its serving SCC AS becomes master AS. Figure 9c illustrates a flow diagram of second UE operations in a UE joining an established collaborative session, wherein the UE decides to join on its own and its serving SCC AS becomes master AS. Figure 9d illustrates a flow diagram of second UE operations in a UE joining an established collaborative session, wherein the UE decides to join on its own and its serving SCC AS becomes master AS. Figure 9e illustrates a flow diagram of first SCC AS operations in a UE joining an established collaborative session, wherein the UE decides to join on its own and its serving SCC AS becomes master AS.

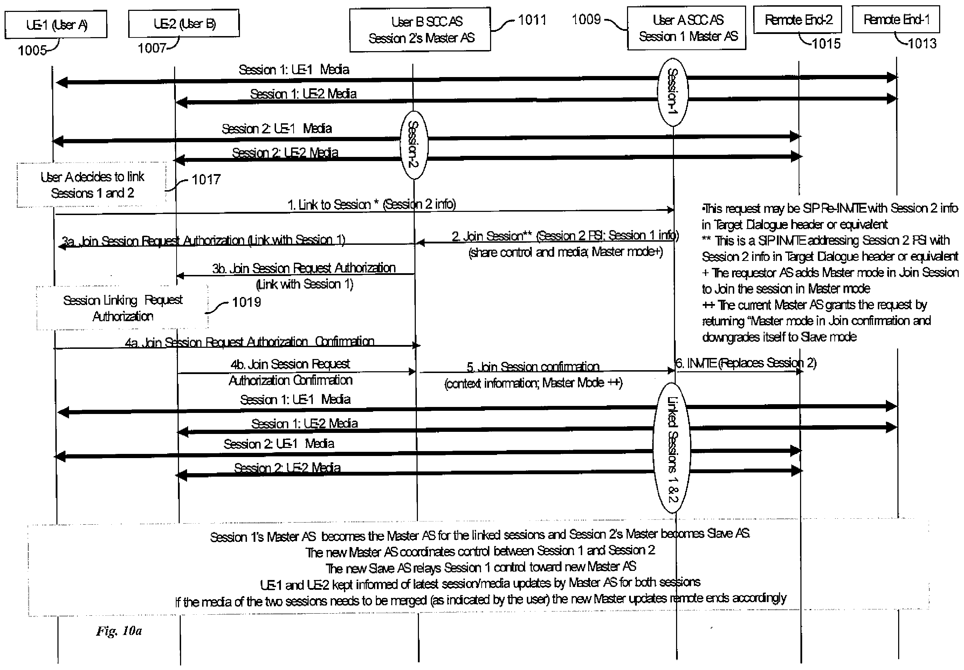

Figure 10a illustrates a message exchange in linking two on going collaborative sessions. As shown in Figure 10a, the message exchange in linking two on going collaborative sessions, involves messages between a first UE 1005, a second UE 1007, a first SCC AS 1009 serving first UE 1005, a second SCC AS 1011 serving second UE 1005, a first remote UE 1013, and a second remote UE 1015.

The message exchange may begin with the two collaborative sessions already in progress. A first collaborative session is between first UE 1005 and first remote UEs 1013, with the first collaborative session under the control of first SCC AS 1009. A second collaborative session is between second UE 1007 and second remote UE 1015, with the second collaborative session under the control of second SCC AS 1011.

First UE 1005 decides to link the first collaborative session and the second collaborative session (block 1017). First UE 1005 may send a link to session message to first SCC AS 1009 (shown as event #1). The link to session message may be in the form of a SIP PRE-INVITE message with information related to the second collaborative session in the link to session message or an equivalent message. First SCC AS 1009 may send a join session message to second SCC AS 1011 (shown as event #2). The join session message may be in the form of a SIP INVITE message or an equivalent message with information regarding the second collaborative session contained in the message.

Second SCC AS 1011 may initiate a join session request authorization with first UE 1005 (shown as event #3a) as well initiate a join session request authorization with second UE 1007 (shown as event #3b). Both first UE 1005 and second UE 1007 may perform a session linking request authorization (block 1019) to determine if the first collaborative session and the second collaborative session may be linked.

Assuming that the first collaborative session and the second collaborative session may be linked, first UE 1005 may send a join session request authorization confirmation to second SCC AS 1011 (shown as event #4a) and second UE 1007 may send a join session request authorization confirmation to second SCC AS 1011 (shown as event #4b). Second SCC AS 1011 may send a join session confirmation containing context information to first SCC AS 1009 (shown as event #5). As shown in Figure 10a, the second collaborative session is replaced by the first collaborative session to become a joint collaborative session.

First SCC AS 1009 operating in a master mode may re-invite second remote UE 1015 to join the joint collaborative session (shown as event #6). First SCC AS 1009 coordinates control for the joint collaborative session, while second SCC AS 1011 relays control for the joint collaborative session to first SCC AS 1009. First SCC AS 1009 updates first UE 1005 and second UE 1007.

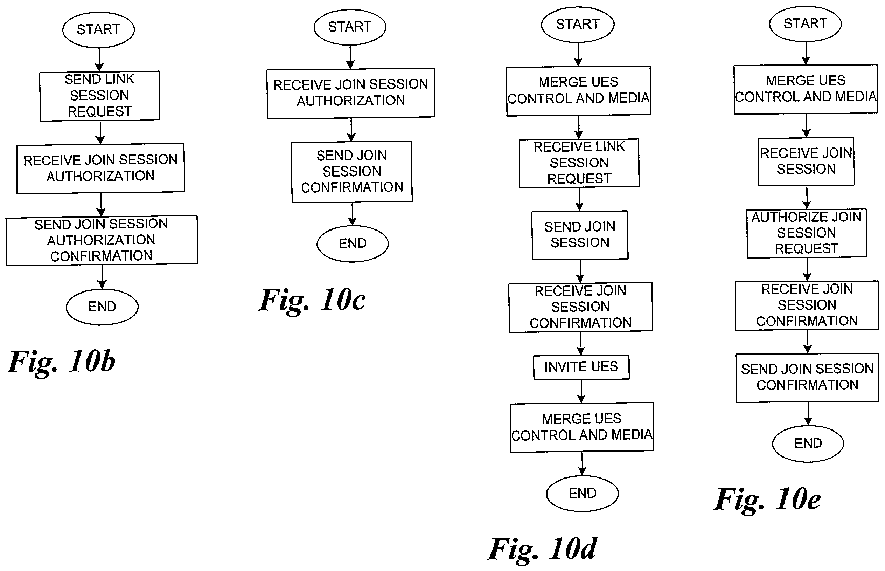

Figure 10b illustrates a flow diagram of first UE operations in linking two on going collaborative sessions. Figure 10c illustrates a flow diagram of second UE operations in linking two on going collaborative sessions. Figure 10d illustrates a flow diagram of second UE operations in linking two on going collaborative sessions. Figure 10e illustrates a flow diagram of first SCC AS operations in linking two on going collaborative sessions.

Although the embodiments and their advantages have been described in detail, it should be understood that various changes, substitutions and alterations can be made herein without departing from the scope of the invention as defined by the appended claims. Moreover, the scope of the present application is not intended to be limited to the particular embodiments of the methods and steps described in the specification. As one of ordinary skill in the art will readily appreciate from the disclosure of the present invention, methods, or steps, presently existing or later to be developed, that perform substantially the same function or achieve substantially the same result as the corresponding embodiments described herein may be utilized according to the present invention. Accordingly, the appended claims are intended to include within their scope such methods or steps.

## Claims

1. A method for application server operations, the method comprising:
receiving, by a master application server (222, 609) serving a first communications device capable of shared collaborative session control, a first message from said first communications device (210, 605), the first message including a request to initiate a collaborative session (200);
forming, by the master application server (222, 609), the collaborative session (200) with a second communications device (216, 607), wherein the second communications device is specified in the first message;
sending, by the master application server (222, 609), a second message to the first communications device (210, 605), the second message confirming an establishment of the collaborative session (200);
merging (617), by the master application server (222), control information from the first communications device (210) and media descriptions from the first communications device (210) and the second communications device (216),
wherein the method is applied to Internet Protocol, IP, Multimedia Subsystem, IMS based collaborative services; and
**characterized in** a further slave application server serving the second communication device being also capable of shared collaborative session control, and
relaying, by said slave application server (224, 611), control information from the second communications device (607) to the master application server (609).

2. The method of claim 1, wherein the first communications (210) device belongs to a first user (205), and wherein the second communications device (216) belongs to the first user (210) or a second user (207).

3. The method of claim 1 or 2, wherein merging control information further comprises merging control information from the second communications device (216).

4. An application server system, comprising:
a master application server (609), adapted to:
serving a first communications device capable of shared collaborative session control; receiving a first message from said first communications device (210, 605), the first message including a request to initiate a collaborative session (200);
forming the collaborative session (200) with a second communications device (216, 607), wherein the second communications device is specified in the first message;
sending a second message to the first communications device (210), the second message confirming an establishment of the collaborative session (200);
merging (617) control information from the first communications device (210, 605) and media descriptions from the first communications device (210, 605) and the second communications device (216, 607),
wherein the master application server forms the collaborative session with the first (210) and second (216) communications device compliant with Internet Protocol, IP, Multimedia Subsystem, IMS based collaborative services; and
charcterized in that the system further comprising a slave application server (611), adapted to:
serving the second communication device being also capable of shared collaborative session control, and
relaying control information from the second communications device (607) to the master application server (609).

5. The system of claim 4, wherein the first communications device (210) belongs to a first user, and wherein the second communications device (216) belongs to the first user or a second user.

6. The system of claim 4 or 5, wherein merging control information further comprises merging control information from the second communications device (216).

## Patentansprüche

1. Verfahren für Anwendungsserverbetrieb, wobei das Verfahren Folgendes umfasst:
Empfangen, durch einen "Master"-Anwendungsserver (222, 609), der einer ersten Kommunikationsvorrichtung dient, die fähig ist zur Steuerung einer gemeinsam genutzten Kollaborationssitzung, einer ersten Nachricht von der ersten Kommunikationsvorrichtung (210, 605), wobei die erste Nachricht eine Anforderung zum Initiieren einer Kollaborationssitzung (200) beinhaltet;
Ausbilden, durch den "Master"-Anwendungsserver (222, 609), der Kollaborationssitzung (200) mit einer zweiten Kommunikationsvorrichtung (216, 607), wobei die zweite Kommunikationsvorrichtung in der ersten Nachricht festgelegt ist;
Senden, durch den "Master"-Anwendungsserver (222, 609), einer zweiten Nachricht an die erste Kommunikationsvorrichtung (210, 605), wobei die zweite Nachricht eine Herstellung der Kollaborationssitzung (200) bestätigt;
Zusammenführen (617), durch den "Master"-Anwendungsserver (222), von Steuerungsinformationen von der ersten Kommunikationsvorrichtung (210) und Medienbeschreibungen von der ersten Kommunikationsvorrichtung (210) und der zweiten Kommunikationsvorrichtung (216),
wobei das Verfahren auf auf einem Internetprotokoll(IP)-Multimediasubsystem (IMS) basierende Kollaborationsdienste angewandt wird; und
**dadurch gekennzeichnet ist, dass**
ein weiterer "Slave"-Anwendungsserver der zweiten Kommunikationsvorrichtung dient, die auch fähig ist zur Steuerung einer gemeinsam genutzten Kollaborationssitzung, und
Weiterleiten, durch den "Slave"-Anwendungsserver (224, 611), von Steuerungsinformationen von der zweiten Kommunikationsvorrichtung (607) an den "Master"-Anwendungsserver (609).

2. Verfahren nach Anspruch 1, wobei die erste Kommunikationsvorrichtung (210) zu einem ersten Benutzer (205) gehört und wobei die zweite Kommunikationsvorrichtung (216) zu dem ersten Benutzer (210) oder zu einem zweiten Benutzer (207) gehört.

3. Verfahren nach Anspruch 1 oder 2, wobei Zusammenführen von Steuerungsinformationen ferner Zusammenführen von Steuerungsinformationen von der zweiten Kommunikationsvorrichtung (216) umfasst.

4. Anwendungsserversystem, das Folgendes umfasst:
einen "Master"-Anwendungsserver (609), der eingerichtet ist zum:
Dienen einer ersten Kommunikationsvorrichtung, die fähig ist zur Steuerung einer gemeinsam genutzten Kollaborationssitzung;
Empfangen einer ersten Nachricht von der ersten Kommunikationsvorrichtung (210, 605), wobei die erste Nachricht eine Anforderung zum Initiieren einer Kollaborationssitzung (200) beinhaltet;
Ausbilden der Kollaborationssitzung (200) mit einer zweiten Kommunikationsvorrichtung (216, 607), wobei die zweite Kommunikationsvorrichtung in der ersten Nachricht festgelegt ist;
Senden einer zweiten Nachricht an die erste Kommunikationsvorrichtung (210),
wobei die zweite Nachricht eine Herstellung der Kollaborationssitzung (200) bestätigt;
Zusammenführen (617) von Steuerungsinformationen von der ersten Kommunikationsvorrichtung (210, 605) und Medienbeschreibungen von der ersten Kommunikationsvorrichtung (210, 605) und der zweiten Kommunikationsvorrichtung (216, 607),
wobei der "Master"-Anwendungsserver die Kollaborationssitzung mit der ersten (210) und der zweiten (216) Kommunikationsvorrichtung konform mit auf einem Internetprotokoll(IP)-Multimediasubsystem (IMS) basierenden Kollaborationsdiensten ausbildet; und
**dadurch gekennzeichnet ist, dass** das System ferner einen "Slave"-Anwendungsserver (611) umfasst, der eingerichtet ist zum:
Dienen der zweiten Kommunikationsvorrichtung, die auch fähig ist zur Steuerung einer gemeinsam genutzten Kollaborationssitzung, und Weiterleiten von Steuerungsinformationen von der zweiten Kommunikationsvorrichtung (607) an den "Master"-Anwendungsserver (609).

5. System nach Anspruch 4, wobei die erste Kommunikationsvorrichtung (210) zu einem ersten Benutzer gehört und wobei die zweite Kommunikationsvorrichtung (216) zu dem ersten Benutzer oder zu einem zweiten Benutzer gehört.

6. System nach Anspruch 4 oder 5, wobei Zusammenführen von Steuerungsinformationen ferner Zusammenführen von Steuerungsinformationen von der zweiten Kommunikationsvorrichtung (216) umfasst.

## Revendications

1. Procédé pour des opérations de serveur d'application, le procédé consistant :
à recevoir, au moyen d'un serveur d'application maître (222, 609) desservant un premier dispositif de communication permettant une commande de session collaborative partagée, un premier message en provenance dudit premier dispositif de communication (210, 605), le premier message comprenant une demande pour initier une session collaborative (200) ;
à former, au moyen du serveur d'application maître (222, 609), la session collaborative (200) avec un second dispositif de communication (216, 607), dans lequel le second dispositif de communication est spécifié dans le premier message ;
à envoyer, au moyen du serveur d'application maître (222, 609), un second message au premier dispositif de communication (210, 605), le second message confirmant un établissement de la session collaborative (200) ;
à fusionner (617), au moyen du serveur d'application maître (222), des informations de commande provenant du premier dispositif de communication (210) et des descriptions multimédias provenant du premier dispositif de communication (210) et du second dispositif de communication (216),
le procédé étant appliqué à des services collaboratifs basés sur un sous-système multimédia de protocole Internet (IP) (IMS) ; et
**caractérisé en ce**
**qu'**un serveur d'application esclave supplémentaire dessert le second dispositif de communication qui permet également une commande de session collaborative partagée, et
à relayer, au moyen dudit serveur d'application esclave (224, 611), des informations de commande du second dispositif de communication (607) au serveur d'application maître (609).

2. Procédé selon la revendication 1, dans lequel le premier dispositif de communication (210) appartient à un premier utilisateur (205) et dans lequel le second dispositif de communication (216) appartient au premier utilisateur (210) ou à un second utilisateur (207).

3. Procédé selon la revendication 1 ou 2, dans lequel la fusion d'informations de commande consiste en outre à fusionner des informations de commande provenant du second dispositif de communication (216).

4. Système de serveur d'application comprenant :
un serveur d'application maître (609) conçu :
pour desservir un premier dispositif de communication permettant une commande de session collaborative partagée ;
pour recevoir un premier message en provenance dudit premier dispositif de communication (210, 605), le premier message comprenant une demande pour initier une session collaborative (200) ;
pour former la session collaborative (200) avec un second dispositif de communication (216, 607), dans lequel le second dispositif de communication est spécifié dans le premier message ;
pour envoyer un second message au premier dispositif de communication (210), le second message confirmant un établissement de la session collaborative (200) ;
pour fusionner (617) des informations de commande provenant du premier dispositif de communication (210, 605) et des descriptions multimédias provenant du premier dispositif de communication (210, 605) et du second dispositif de communication (216, 607),
dans lequel le serveur d'application maître forme la session collaborative avec le premier (210) et le second dispositif de communication (216) compatibles avec des services collaboratifs basés sur un sous-système multimédia de protocole Internet (IP) (IMS) ; et
**caractérisé en ce que** le système comprend en outre
un serveur d'application esclave (611) conçu :
pour desservir le second dispositif de communication qui permet également une commande de session collaborative partagée, et
pour relayer des informations de commande du second dispositif de communication (607) au serveur d'application maître (609).

5. Système selon la revendication 4, dans lequel le premier dispositif de communication (210) appartient à un premier utilisateur et dans lequel le second dispositif de communication (216) appartient au premier utilisateur ou à un second utilisateur.

6. Système selon la revendication 4 ou 5, dans lequel la fusion d'informations de commande consiste en outre à fusionner des informations de commande provenant du second dispositif de communication (216).
